(19) Europäisches Patentamt
European Patent Office
Office européen des brevets

(11) **EP 4 679 823 A1**

(12) **EUROPEAN PATENT APPLICATION**

(43) Date of publication:
**14.01.2026 Bulletin 2026/03**

(21) Application number: **24307058.8**

(22) Date of filing: **09.12.2024**

(51) International Patent Classification (IPC):
**H04N 19/11** *(2014.01)* **H04N 19/147** *(2014.01)*
**H04N 19/176** *(2014.01)* **H04N 19/593** *(2014.01)*
**H04N 19/61** *(2014.01)*

(52) Cooperative Patent Classification (CPC):
**H04N 19/593; H04N 19/11; H04N 19/147;**
**H04N 19/176; H04N 19/61**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **10.07.2024 EP 24306162**

(71) Applicant: **InterDigital CE Patent Holdings, SAS**
**75017 Paris (FR)**

(72) Inventors:
• **LO BIANCO, Federico**
**35700 RENNES (FR)**
• **GALPIN, Franck**
**35235 THORIGNE-FOUILLARD (FR)**
• **DUMAS, Thierry**
**35700 RENNES (FR)**
• **LE PENDU, Mikael**
**35700 RENNES (FR)**

(74) Representative: **Vossius & Partner**
**Patentanwälte Rechtsanwälte mbB**
**Siebertstraße 3**
**81675 München (DE)**

(54) **LOW-RANK FACTORIZATION OF MATRIX INTRA PREDICTION MATRICES**

(57)      Video coding using reduced-rank matrices for matrix intra prediction (MIP). In a video decoding method, information is obtained indicating a matrix intra prediction mode for a current block. Based on the intra prediction mode and the current block shape, a first matrix and a second matrix are selected from a stored set of intra prediction matrices. Each of the matrices in the stored set of intra prediction matrices is associated with a respective block shape and intra prediction mode, and wherein all matrices associated with the same block shape have the same rank. The current block is predicted using a product of the first matrix, the second matrix, and a plurality of reference samples.

FIG. 18

## Description

### CROSS-REFERENCE

This application claims the priority of European Patent Application No. 24306162.9, filed 10 July 2024, entitled "Low-Rank Factorization of Matrix Intra Prediction Matrices."

### BACKGROUND

The present disclosure relates to matrix intra prediction (MIP) for video encoding and decoding (collectively "coding.") Matrix intra prediction is a type of intra prediction in which samples in a current block are predicted by multiplying reference samples by a matrix, where different matrices correspond to different prediction modes, and the prediction mode for a particular block of video is generally signaled in a bitstream encoding the video. Examples of systems for the use of matrix intra prediction and for the efficient storage of the matrices used in MIP are described in US20220256161A1, "Method and apparatus for video encoding and decoding with matrix based intra-prediction."

### SUMMARY

A video decoding method according to some embodiments comprises: obtaining information indicating a matrix intra prediction mode for a current block, the current block having a block shape, the current block having a plurality of reference samples in a neighborhood of the current block; based on the intra prediction mode and the current block shape, selecting a first matrix and a second matrix from a stored set of intra prediction matrices, wherein each of the matrices in the stored set of intra prediction matrices is associated with a respective block shape and intra prediction mode, and wherein all matrices associated with the same block shape have the same rank; and predicting the current block using a first product of the reference samples, the first matrix, and the second matrix.

A video decoding apparatus according to some embodiments comprises one or more processors configured to perform at least: obtaining information indicating a matrix intra prediction mode for a current block, the current block having a block shape, the current block having a plurality of reference samples in a neighborhood of the current block; based on the intra prediction mode and the current block shape, selecting a first matrix and a second matrix from a stored set of intra prediction matrices, wherein each of the matrices in the stored set of intra prediction matrices is associated with a respective block shape and intra prediction mode, and wherein all matrices associated with the same block shape have the same rank; and predicting the current block using a first product of the reference samples, the first matrix, and the second matrix.

A video encoding method according to some embodiments comprises: selecting a matrix intra prediction mode for a current block, the current block having a block shape, the current block having a plurality of neighboring reference samples; based on the intra prediction mode and the current block shape, selecting a first matrix and a second matrix from a stored set of intra prediction matrices, wherein each of the matrices in the stored set of intra prediction matrices is associated with a respective block shape and intra prediction mode, and wherein all matrices associated with the same block shape have the same rank; and predicting the current block using a first product of the reference samples, the first matrix, and the second matrix.

A video encoding apparatus according to some embodiments comprises: selecting a matrix intra prediction mode for a current block, the current block having a block shape, the current block having a plurality of neighboring reference samples; based on the intra prediction mode and the current block shape, selecting a first matrix and a second matrix from a stored set of intra prediction matrices, wherein each of the matrices in the stored set of intra prediction matrices is associated with a respective block shape and intra prediction mode, and wherein all matrices associated with the same block shape have the same rank; and predicting the current block using a first product of the reference samples, the first matrix, and the second matrix.

A video encoding method according to some embodiments comprises: for each of a plurality of matrix intra prediction modes, obtaining a test prediction for a current block, each test prediction being obtained using a product of plurality of neighboring reference samples, a first matrix associated with the respective mode, and a second matrix associated with the respective mode; selecting a prediction mode based on the test predictions; and predicting the current block using a product of the reference samples and a third matrix associated with the selected prediction mode.

A video encoding apparatus comprising one or more processors configured to perform at least: for each of a plurality of matrix intra prediction modes, obtaining a test prediction for a current block, each test prediction being obtained using a product of plurality of neighboring reference samples, a first matrix associated with the respective mode, and a second matrix associated with the respective mode; selecting a prediction mode based on the test predictions; and predicting the current block using a product of the reference samples and a third matrix associated with the selected prediction mode.

In some embodiments, a product of the first matrix associated with the selected prediction mode and the second matrix associated with the selected prediction mode is an approximation of the third matrix.

In additional embodiments, encoder and decoder apparatus are provided to perform the methods described herein. An encoder or decoder apparatus may include a processor configured to perform the methods described herein. The apparatus may include a computer-readable medium (e.g. a non-transitory medium) storing instructions for performing the methods described herein. In some embodiments, a computer-readable medium (e.g. a non-transitory medium) stores a video encoded using any of the methods described herein.

One or more of the present embodiments also provide a computer readable storage medium having stored thereon instructions for performing bi-directional optical flow, encoding or decoding video data according to any of the methods described above. The present embodiments also provide a computer readable storage medium having stored thereon a bitstream generated according to the methods described above. The present embodiments also provide a method and apparatus for transmitting the bitstream generated according to the methods described above. The present embodiments also provide a computer program product including instructions for performing any of the methods described.

**BRIEF DESCRIPTION OF THE DRAWINGS**

FIG. 1 is a functional block diagram of a system used in some embodiments described herein.

FIG. 2A is a functional block diagram of block-based video encoder, such as an encoder used for H.266 (WC).

FIG. 2B is a functional block diagram of a block-based video decoder, such as a decoder used for H.266 (WC).

FIG. 3 illustrates the use of reference samples for intra prediction in H.266 in the case of a square current block (W=H=N). The pixel values at coordinates (x,y) are indicated in the figure by P(x,y).

FIG. 4 illustrates the prediction directions for square blocks in H.266.

FIG. 5 illustrates prediction of a $4\times4$ luminance block from its set of 4 decoded reference samples above this block and 4 decoded reference samples on its left side via the MIP mode of index $k \in [\![0,15]\!]$.

FIG. 6 illustrates a mapping from the MIP mode index and the MIP matrix index for a $4\times4$ luminance block to be predicted.

FIG. 7 illustrates prediction of a $8\times4$ luminance block from its set of 8 decoded reference samples above this block and 4 decoded reference samples on its left side via the MIP mode of index $k \in [\![0,7]\!]$.

FIG. 8 illustrates a mapping from the MIP mode index and the MIP matrix index for either a $4\times4$ luminance block or $4\times8$ luminance block or $8\times8$ luminance block to be predicted.

FIG. 9 illustrates prediction of a $16\times16$ luminance block from its set of 16 decoded reference samples above this block and 16 decoded reference samples on its left side via the MIP mode of index $k \in [\![0,5]\!]$.

FIG. 10 illustrates a mapping from the MIP mode index and the MIP matrix index for all luminance blocks, excluding $4\times4$, $4\times8$, $8\times4$, $8\times8$ luminance blocks to be predicted.

FIG. 11 illustrates prediction of a $4\times4$ luminance block from its set of 4 decoded reference samples above this block and 4 decoded reference samples on its left side via the MIP mode of index $j \in [\![16,31]\!]$.

FIG. 12 illustrates above and left CU locations for deriving the MPM list in for different block shapes.

FIG. 13 provides a decision tree illustrating the intra prediction signaling for luminance in VTM-8.0.

FIG. 14 provides a decision tree illustrating the intra prediction signaling for chrominance in VTM-8.0.

FIG. 15 illustrates a set of MIP reference samples.

FIG. 16 is a flow chart illustrating a decoding method according to some embodiments.

FIG. 17 is a flow chart illustrating an encoding method according to some embodiments.

FIG. 18 is a flow chart illustrating an encoding method according to some embodiments.

## DETAILED DESCRIPTION

### Example Systems

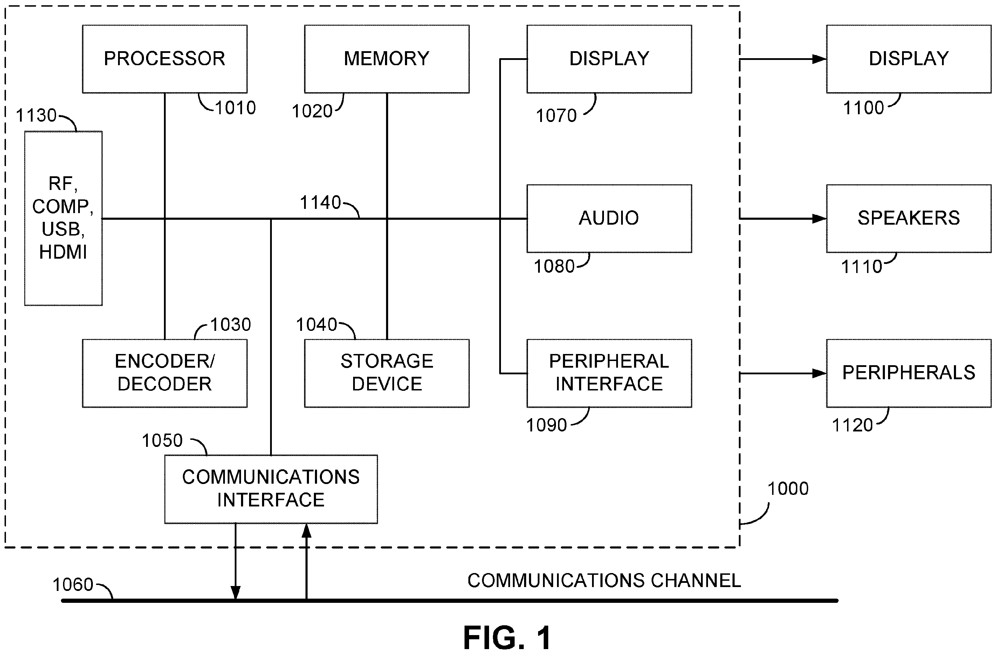

The embodiments described herein may be implemented using systems such as the system of FIG. 1. FIG. 1 is a block diagram of an example of a system in which various aspects and embodiments are implemented. System 1000 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 1000, singly or in combination, can be embodied in a single integrated circuit (IC), multiple ICs, and/or discrete components. For example, in at least one embodiment, the processing and encoder/decoder elements of system 1000 are distributed across multiple ICs and/or discrete components. In various embodiments, the system 1000 is communicatively coupled to one or more other systems, or other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. Processor 1010 can include embedded memory, input output interface, and various other circuitries as known in the art. The system 1000 includes at least one memory 1020 (e.g., a volatile memory device, and/or a non-volatile memory device). System 1000 includes a storage device 1040, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1040 can include an internal storage device, an attached storage device (including detachable and non-detachable storage devices), and/or a network accessible storage device, as non-limiting examples.

System 1000 includes an encoder/decoder module 1030 configured, for example, to process data to provide an encoded video or decoded video, and the encoder/decoder module 1030 can include its own processor and memory. The encoder/decoder module 1030 represents module(s) that can be included in a device to perform the encoding and/or decoding functions. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform the various aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or WC (Versatile Video Coding, a new standard being developed by JVET, the Joint Video Experts Team).

The input to the elements of system 1000 can be provided through various input devices as indicated in block 1130. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1, include composite video.

In various embodiments, the input devices of block 1130 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface ICs or within processor 1010 as necessary. The demodulated, error corrected, and demultiplexed stream is provided to various processing elements, including, for example, processor 1010, and encoder/decoder 1030 operating in combination with the memory and storage elements to process the datastream as necessary for presentation on an output device.

Various elements of system 1000 can be provided within an integrated housing, Within the integrated housing, the various elements can be interconnected and transmit data therebetween using suitable connection arrangement 1140, for example, an internal bus as known in the art, including the Inter-IC (I2C) bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed, or otherwise provided, to the system 1000, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1060 and the communications interface 1050 which are adapted for Wi-Fi communications. The communications channel 1060 of these embodiments is typically connected to an access point or router that provides access to external networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130. As indicated above, various embodiments provide data in a non-streaming manner. Additionally, various embodiments use wireless networks other than Wi-Fi, for example a cellular network or a Bluetooth network.

The system 1000 can provide an output signal to various output devices, including a display 1100, speakers 1110, and other peripheral devices 1120. The display 1100 of various embodiments includes one or more of, for example, a touchscreen display, an organic light-emitting diode (OLED) display, a curved display, and/or a foldable display. The display 1100 can be for a television, a tablet, a laptop, a cell phone (mobile phone), or other device. The display 1100 can also be integrated with other components (for example, as in a smart phone), or separate (for example, an external monitor for a laptop). The other peripheral devices 1120 include, in various examples of embodiments, one or more of a standalone digital video disc (or digital versatile disc) (DVR, for both terms), a disk player, a stereo system, and/or a lighting system. Various embodiments use one or more peripheral devices 1120 that provide a function based on the output of the system 1000. For example, a disk player performs the function of playing the output of the system 1000.

In various embodiments, control signals are communicated between the system 1000 and the display 1100, speakers 1110, or other peripheral devices 1120 using signaling such as AV.Link, Consumer Electronics Control (CEC), or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller (T Con) chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

## Block-Based Video Coding

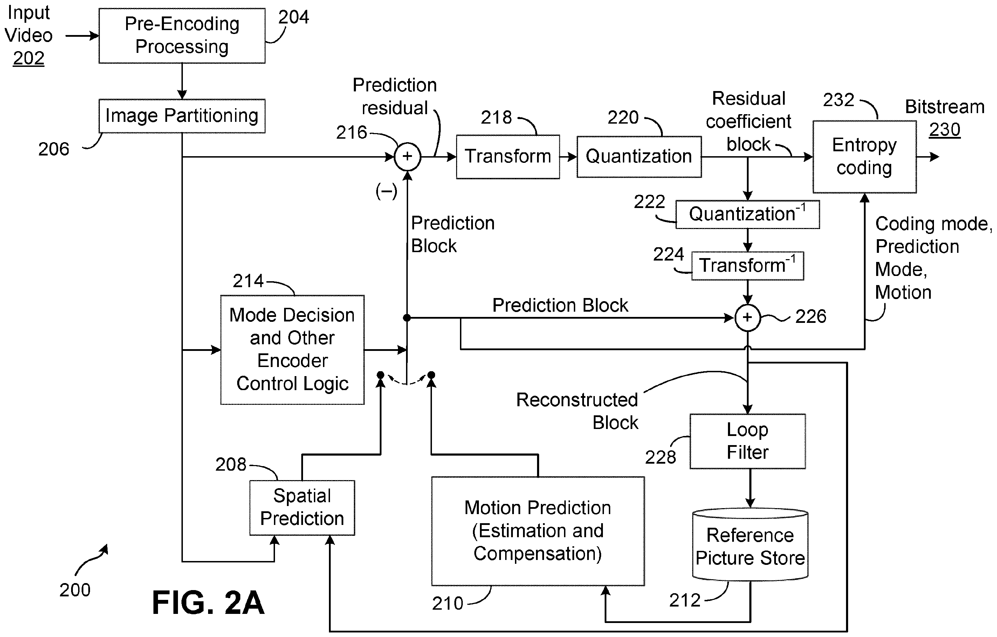

Like H.265 (HEVC), H.266 (WC) is built on a block-based hybrid video coding framework. FIG. 2A gives the block diagram of a block-based hybrid video encoding system 200. Variations of this encoder 200 are contemplated, but the encoder 200 is described below for purposes of clarity without describing all expected variations.

Before being encoded, a video sequence may go through pre-encoding processing (204), for example, applying a color transform to an input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the preprocessing and attached to the bitstream.

The input video signal 202 including a picture to be encoded is partitioned (206) and processed block by block in units of, for example, CUs. Different CUs may have different sizes. In some codecs, a CU can be up to 128x128 pixels. Some codecs partition blocks only based on quad-trees; in others, a coding tree unit (CTU) may be split into CUs to adapt to varying local characteristics based on quad/binary/ternary-tree. While some codecs use a concept of multiple partition unit types such as CU, prediction unit (PU) and transform unit (TU), in other codecs, each CU is always used as the basic unit for both prediction and transform without further partitions. In the multi-type tree structure, a CTU is firstly partitioned by a quad-tree structure. Then, each quad-tree leaf node can be further partitioned by a binary and ternary tree structure. Different splitting types may be used, such as quaternary partitioning, vertical binary partitioning, horizontal binary partitioning, vertical ternary partitioning, and horizontal ternary partitioning.

In the encoder of FIG. 2A, spatial prediction (208) and/or temporal prediction (210) may be performed. Spatial prediction (or "intra prediction") uses pixels from the samples of already coded neighboring blocks (which are called reference samples) in the same video picture/slice to predict the current video block. Spatial prediction reduces spatial redundancy inherent in the video signal. Temporal prediction (also referred to as "inter prediction" or "motion compensated prediction") uses reconstructed pixels from the already coded video pictures to predict the current video block. Temporal prediction reduces temporal redundancy inherent in the video signal. A temporal prediction signal for a given CU may be signaled by one or more motion vectors (MVs) which indicate the amount and the direction of motion between the current CU and its temporal reference. Also, if multiple reference pictures are supported, a reference picture index may additionally be sent, which is used to identify from which reference picture in the reference picture store (212) the temporal prediction signal comes.

The mode decision block (214) in the encoder chooses the best prediction mode, for example based on a rate-distortion optimization method. This selection may be made after spatial and/or temporal prediction is performed. The intra/inter decision may be indicated by, for example, a prediction mode flag. The prediction block is subtracted from the current video block (216) to generate a prediction residual. The prediction residual is de-correlated using transform (218) and quantized (220). (For some blocks, the encoder may bypass both transform and quantization, in which case the residual may be coded directly without the application of the transform or quantization processes.) The quantized residual coefficients are inverse quantized (222) and inverse transformed (224) to form the reconstructed residual, which is then added back to the prediction block (226) to form the reconstructed signal of the CU. Further in-loop filtering, such as deblocking/SAO (Sample Adaptive Offset) filtering, may be applied (228) on the reconstructed CU to reduce encoding artifacts before it is put in the reference picture store (212) and used to code future video blocks. To form the output video bit-stream 230, coding mode (inter or intra), prediction mode information, motion information, and quantized residual coefficients are all sent to the entropy coding unit (108) to be further compressed and packed to form the bit-stream.

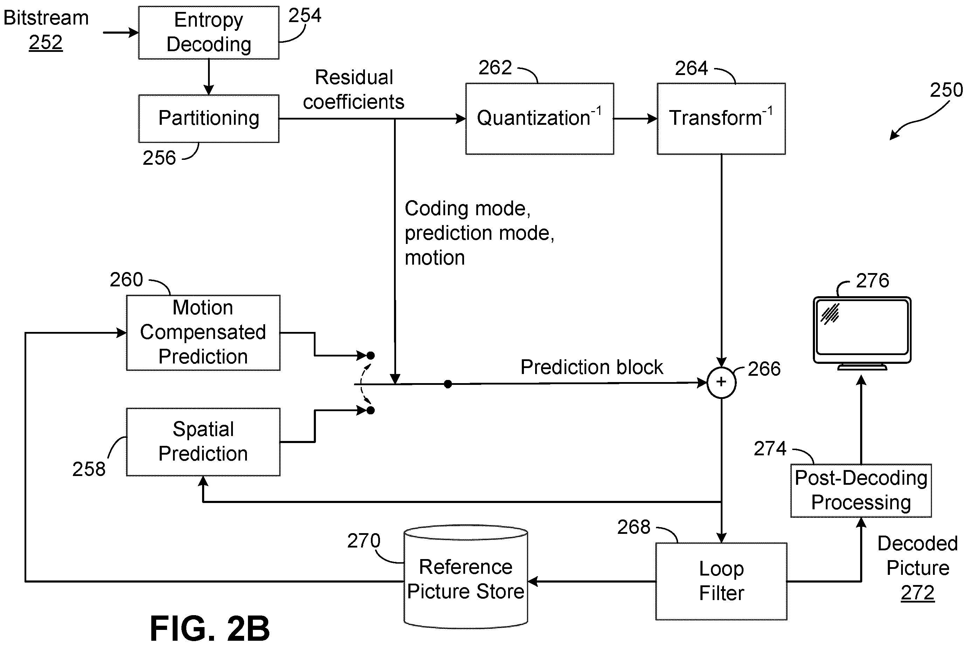

FIG. 2B gives a block diagram of a block-based video decoder 250. In the decoder 250, a bitstream is decoded by the decoder elements as described below. Video decoder 250 generally performs a decoding pass reciprocal to the encoding pass as described in FIG. 2A. The encoder 200 also generally performs video decoding as part of encoding video data.

In particular, the input of the decoder includes a video bitstream 252, which can be generated by video encoder 200. The video bit-stream 252 is first unpacked and entropy decoded at entropy decoding unit 254 to obtain transform coefficients, motion vectors, and other coded information. Picture partition information indicates how the picture is partitioned. The decoder may therefore divide (256) the picture according to the decoded picture partitioning information. The coding mode and prediction information are sent to either the spatial prediction unit 258 (if intra coded) or the temporal prediction unit 260 (if inter coded) to form the prediction block. The residual transform coefficients are sent to inverse quantization unit 262 and inverse transform unit 264 to reconstruct the residual block. The prediction block and the residual block are then added together at 266 to generate the reconstructed block. The reconstructed block may further go through in-loop filtering 268 before it is stored in reference picture store 270 for use in predicting future video blocks.

The decoded picture 272 may further go through post-decoding processing (274), for example, an inverse color transform (e.g. conversion from YCbCr 4:2:0 to RGB 4:4:4) or an inverse remapping performing the inverse of the remapping process performed in the pre-encoding processing (204). The post-decoding processing can use metadata derived in the pre-encoding processing and signaled in the bitstream. The decoded, processed video may be sent to a display device 276. The display device 276 may be a separate device from the decoder 250, or the decoder 250 and the display device 276 may be components of the same device.

Various methods and other aspects described in this disclosure can be used to modify modules of a video encoder 200 or decoder 250. Moreover, the systems and methods disclosed herein are not limited to H.265 or H.266 and can be applied, for example, to other standards and recommendations, whether pre-existing or future-developed, and extensions of any such standards and recommendations (including H.265 and H.266). Unless indicated otherwise, or technically precluded, the aspects described in this disclosure can be used individually or in combination.

**Intra prediction in H.266**

The intra prediction process in H.266 involves gathering reference samples, processing them, deriving the actual prediction of the samples of the current block, and finally post-processing the predicted samples.

*Reference sample generation*

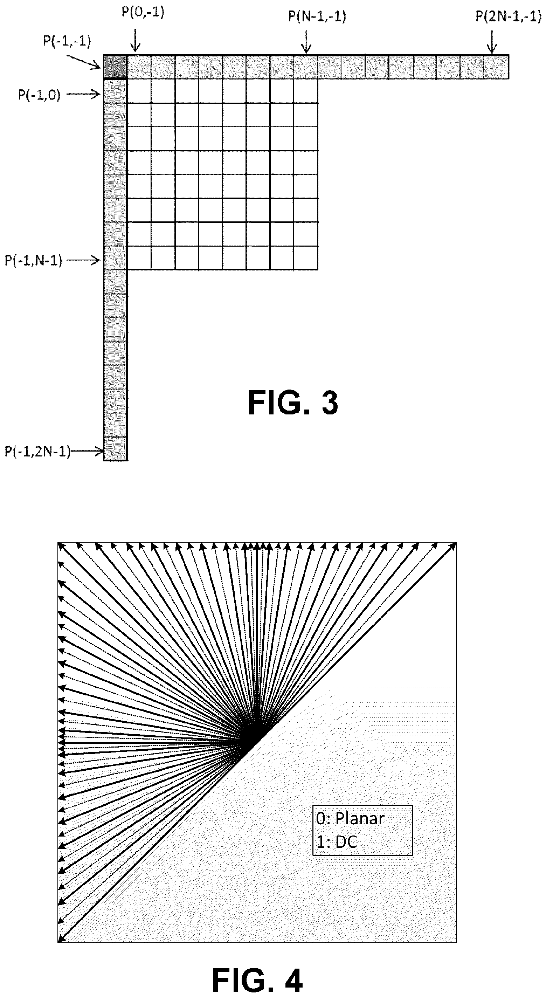

The reference sample generation process is illustrated in FIG. 3. An "above" row of 2*W* samples is formed from the previously decoded pixels located above the current block, *W* denoting the block width. Similarly, a "left" column of 2*H* samples is formed from the decoded pixels located on the left side of the current block, *H* denoting the block height. The corner pixel is also used to fill up the gap between the "above" row and the "left" column references. If some of the samples above the current block and/or on its left side are not available, (because, for example, the corresponding Coding Blocks (CBs) are not in the same slice or the current CB is at a frame boundary), a method called reference sample substitution is performed where the missing samples are copied from the available samples in a clockwise direction. Next, depending on the current CU size and the prediction mode, the reference samples are filtered using a specified filter.

*Prediction models inherited from H.265 and extended in H.266*

H.266 includes a range of prediction models derived from those in H.265. PLANAR and DC prediction modes are used to predict smooth and gradually changing regions. In contrast, angular prediction modes are used to capture different directional structures. There exist 65 directional prediction modes in H.266 which are organized differently for each rectangular block shape. These prediction modes correspond to different prediction directions as illustrated in FIG. 4.

*Matrix Intra Prediction (MIP)*

Intra prediction was further expanded from H.265 to H.266 with tools such as intra prediction with Multiple Reference Lines (MRL), Intra prediction with Sub-Partitions (ISP), and Matrix Intra-prediction (MIP). MIP is implemented such that the memory footprint of its parameters in H.266 is limited.

Current MIP applies to luminance blocks exclusively. The prediction of a $W \times H$ luminance block via MIP may be described as three steps. First, the $W$ decoded reference samples above the block and the $H$ decoded reference samples on its left side are downsampled. Then, the result of the downsampling is linearly transformed into a reduced prediction.

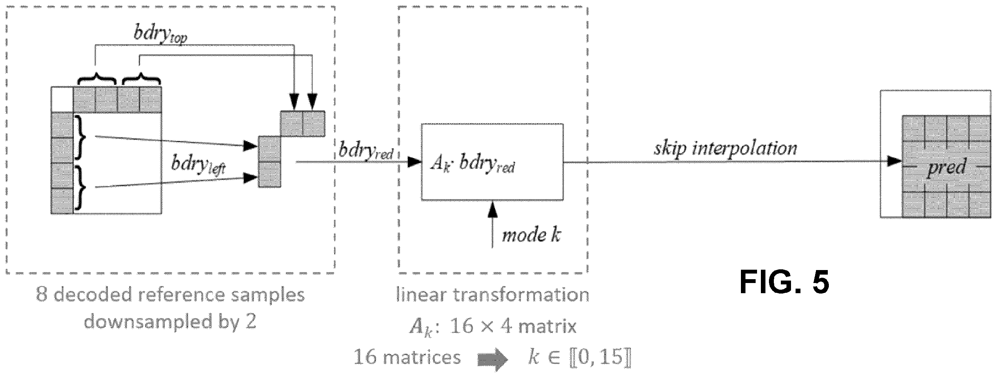

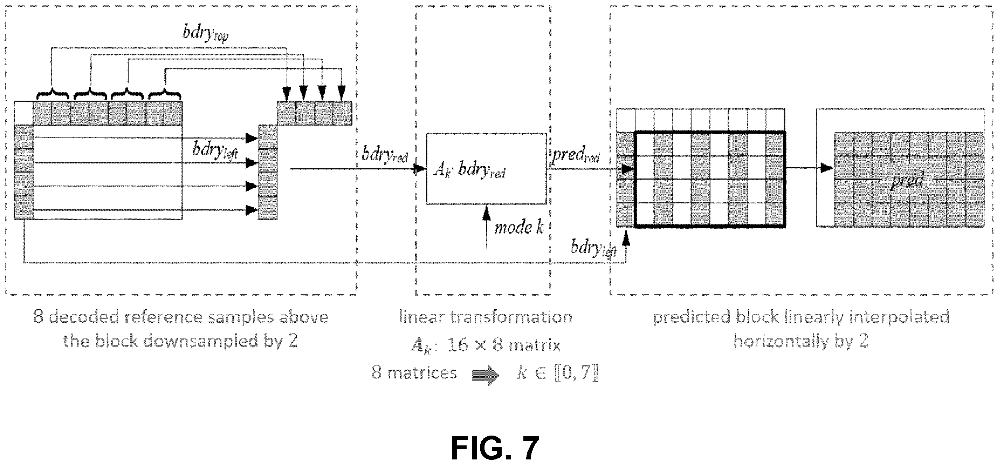

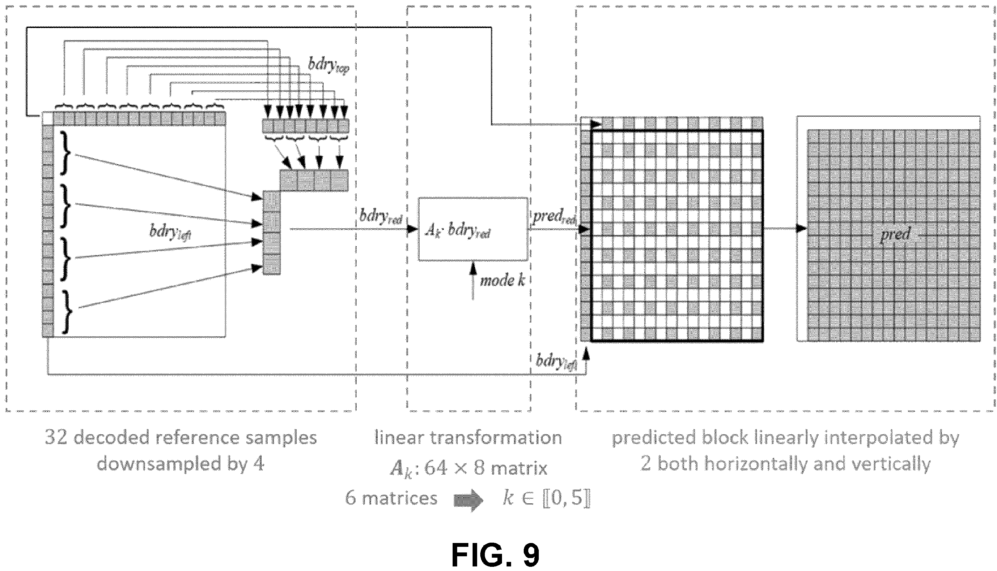

Finally, the reduced prediction is linearly interpolated such that the interpolated prediction has the same size as the block. More precisely, if $W = 4$ and $H = 4$, the downsampling factor is equal to 2. Besides, the MIP matrix in the linear transform has size $16 \times 4$ (4 input samples and 16 output samples), see FIG. 5. If either $W = 4$ and $H = 8$ or $W = 8$ and $H = 4$ or $W = 8$ and $H = 8$, the downsampling factor for the $W$ decoded reference samples is $W/4$ and the downsampling factor for the $H$ decoded reference samples is $H/4$. Besides, the MIP matrix in the linear transform has size $16 \times 8$ (8 input samples and 16 output samples), see FIG. 7. For all the other block sizes, the downsampling factor for the $W$ decoded reference samples is $W/4$ and the downsampling factor for the $H$ decoded reference samples is $H/4$. Besides, the MIP matrix in the linear transform has size $64 \times 8$ (8 input samples and 64 output samples), see FIG. 9. Note that, for the interpolation step, a horizontal interpolation of the reduced prediction uses some of the $H$ decoded reference samples, not their downsampled version. A vertical interpolation of the reduced prediction uses some of the $W$ decoded reference samples, not their downsampled version.

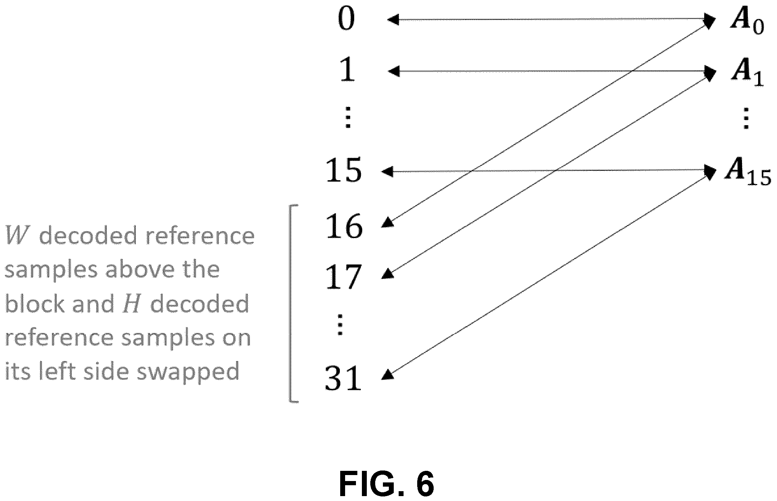

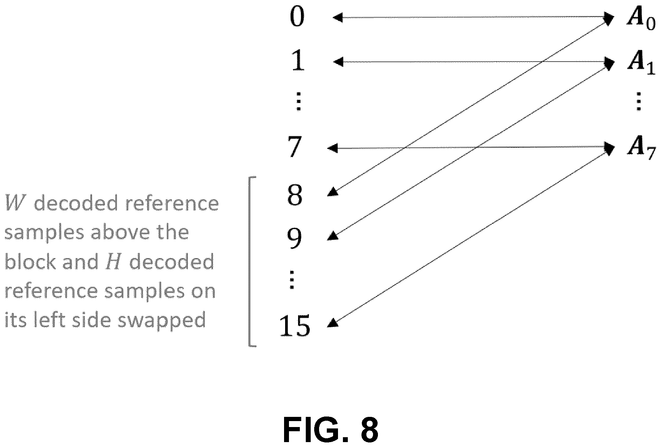

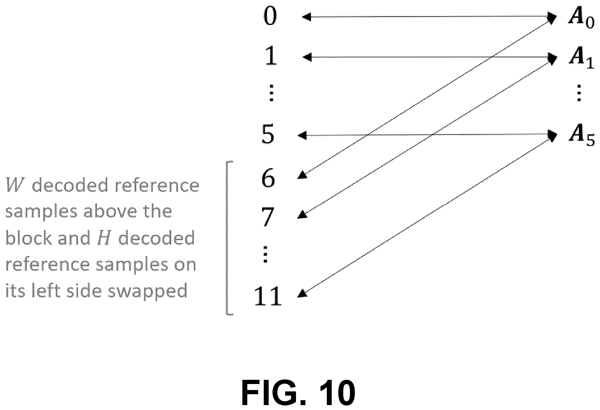

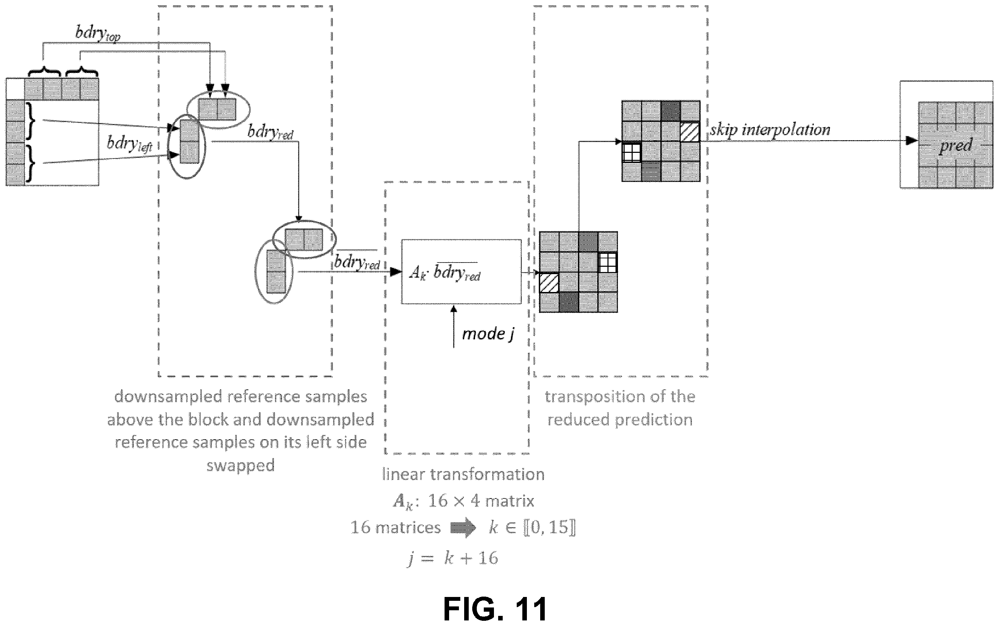

If $W = 4$ and $H = 4$, there exist 32 MIP modes. These modes are split into pairs, each pair using the same MIP matrix, but, for the second mode of each pair, the downsampled reference samples above the luminance block and the downsampled reference samples on its left side are swapped. The mapping from the MIP mode index to the MIP matrix index is illustrated in FIG. 6. When the swap of the downsampled reference samples applies, the reduced prediction is transposed before being interpolated. For instance, the case where $W = 4$, $H = 4$, and the swap of the downsampled reference samples applies is depicted in FIG. 11. If $W = 4$ and $H = 8$ or $W = 8$ and $H = 4$ or $W = 8$ and $H = 8$, there are 16 MIP modes. The corresponding mapping becomes that in FIG. 8. For all the other block sizes, 12 MIP modes are used. The corresponding mapping is shown in FIG. 10.

Given the previous explanation, in MIP, the process of downsampling the decoded reference samples and interpolating the reduced prediction enables the reuse of the same set of matrices for predicting luminance blocks of different sizes, thus limiting the number of needed MIP matrices, and in turn limits the number of matrix coefficients stored in H.266. As each MIP matrix coefficient is coded using 8 bits, the memory footprint of the MIP matrix coefficients only amounts to 5120 bytes.

## Intra prediction signaling in H.266

### Intra prediction signaling for luminance

For the luminance channel, intra prediction signaling is described first for PLANAR, DC, and the 65 directional modes. Signaling of MRL, ISP, and MIP are described later in this document.

**Signaling of PLANAR, DC, and the 65 directional modes.** On the encoder side, the best intra prediction mode according to a rate-distortion criterion is selected, and its index is transmitted from the encoder to the decoder. To perform the signaling of the selected mode index via entropy coding, a list of Most Probable Modes (MPMs) is built.

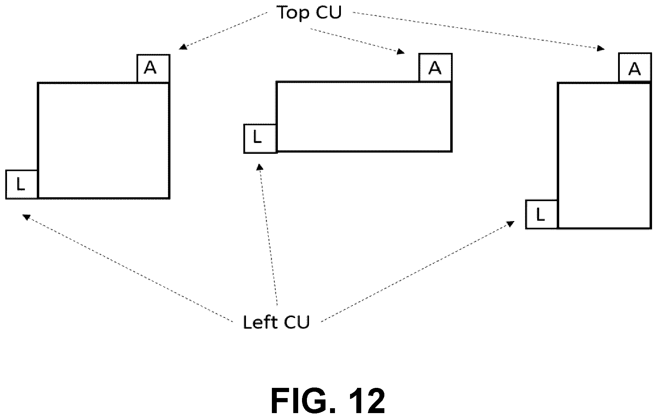

In VTM-8.0, an MPM list contains 6 intra prediction modes for signaling the intra prediction mode of the current block. The MPM list is created from the prediction modes of the intra coded CUs located above and on the left side of the current CU and some default modes. The above and left CUs are at the right and bottom edge of the current block, as shown in FIG. 12. Initialization of the MPM list may be performed as follows, where L refers to the intra prediction mode of the left CU whose index belongs to [0,66], and A refers to the intra prediction mode of the above CU whose index value belongs to [0,66].

```
offset = 61
mod = 64
MPM[0] = PLANAR_IDX
MPM[1] = DC_IDX
MPM[2] = VER_IDX
MPM[3] = HOR_IDX
MPM[4] = VER_IDX − 4
MPM[5] = VER_IDX + 4


if (L == A)
    if (L > DC_IDX)
        MPM[0] = PLANAR_IDX
        MPM[1] = L
        MPM[2] = ((L + offset) % mod) + 2
        MPM[3] = ((L − 1) % mod) + 2
        MPM[4] = ((L + offset − 1) % mod) + 2
        MPM[5] = (L % mod) + 2
    else
        use initialized values
else
    if ((L > DC_IDX) && (A > DC_IDX))
        MPM[0] = PLANAR_IDX
        MPM[1] = L
        MPM[2] = A
```

$$MPM[3] = \begin{cases} ((\min(L, A) + offset) \% mod) + 2 & \text{if } (*) \\ ((\min(L, A) − 1) \% mod) + 2 & \text{if } (**) \\ ((\min(L, A) − 1) \% mod) + 2 & \text{if } (***) \\ ((\min(L, A) + offset) \% mod) + 2 & \text{if } (****) \end{cases}$$

$$MPM[4] = \begin{cases} ((\max(L, A) − 1) \% mod) + 2 & \text{if } (*) \\ ((\max(L, A) + offset) \% mod) + 2 & \text{if } (**) \\ ((\min(L, A) + offset) \% mod) + 2 & \text{if } (***) \\ ((\min(L, A) − 1) \% mod) + 22 & \text{if } (****) \end{cases}$$

$$MPM[5] = \begin{cases} ((\min(L, A) + offset − 1) \% mod) + 2 & \text{if } (*) \\ (\min(L, A) \% mod) + 2 & \text{if } (**) \\ ((\max(L, A) − 1) \% mod) + 2 & \text{if } (***) \\ ((\max(L, A) + offset) \% mod) + 2 & \text{if } (****) \end{cases}$$

```
    else if (L + A >= 2)
        MPM[0] = PLANAR_IDX
        MPM[1] = max(L, A)
        MPM[2] = ((max(L, A) + offset) % mod) + 2
        MPM[3] = ((max(L,A) − 1) % mod) + 2
        MPM[4] = ((max(L, A) + offset − 1) % mod) + 2
        MPM[5] = (max(L, A) % mod) + 2
```

else

use initialized values

In the above example, the following shorthand is used:

(*) max(L, A) - min(L, A) == 1
(**) max(L, A) - min(L, A) >= 62
(***) max(L, A) - min(L, A) == 2
(****) all other cases

If the selected intra prediction mode for predicting the current block corresponds to one of the six MPM modes, it is signaled via *mpmFlag* with value 1. Then, the candidate mode from the MPM list is signaled using the variable length coding scheme shown in Table 1. Otherwise, *mpmFlag* is equal to 0 and the candidate index in the set of remaining 61 modes is truncated binary encoded using either 5 or 6 bits.

Table 1: MPM signaling in VTM-8.0.

| Candidate Index | Code |
|---|---|
| MPM[0] | 0 |
| MPM[1] | 10 |
| MPM[2] | 110 |
| MPM[3] | 1110 |
| MPM[4] | 11110 |
| MPM[5] | 11111 |

**Signaling of Multiple Reference Lines (MRL).** For intra prediction with MRL, the reference line used for the prediction is signaled with *multiRefIdx.* The value of *multiRefIdx* can be either 0, 1, or 2, encoded respectively as 0, 10, and 11, signaling respectively the first, second, and third reference lines. When *multiRefIdx* > 0, the prediction mode always belongs to the MPM list. Thus, *mpmFlag* is not signaled. Furthermore, PLANAR is excluded from the list. This means that only 5 MPMs are available as possible candidates. When *multiRefIdx* > 0, the prediction mode is signaled as shown in Table 2.

Table 2: MPM signaling when multiRefIdx >0 in VTM-8.0.

| Candidate index | Code |
|---|---|
| MPM[1] | 0 |
| MPM[2] | 10 |
| MPM[3] | 110 |
| MPM[4] | 1110 |
| MPM[5] | 1111 |

**Signaling of Intra prediction with Sub-Partitions (ISP).** For ISP, the type of partitioning used for the CU is signaled with *ispMode.* The value of *ispMode* can be either 0, 1, or 2, encoded respectively as 0, 10, and 11, signaling respectively no partitioning, horizontal partitioning, and vertical partitioning. *ispMode* is encoded only when *multiRefIdx* is equal to 0.

**Signaling of Matrix Intra Prediction (MIP).** An MIP mode is first signaled with *mipFlag,* a value of 1 meaning that a MIP mode is used to predict the current luminance block, 0 meaning that one of the 67 conventional intra prediction modes is used. When *mipFlag* is equal to 1, *multiRefIdx* is inferred to 0 and *ispMode* is inferred to 0. Therefore, when *mipFlag* is equal to 1, *multiRefIdx* and *ispMode* are not written to the bitstream. If *mipFlag* is equal to 1, *mipTransposedFlag* is written to the bitstream to indicate if the downsampled reference samples above the current luminance block and the downsampled reference samples on its left side are swapped for the selected MIP mode. Finally, the index of the MIP matrix of the selected MIP mode is then truncated binary encoded.

To handle the case where the intra prediction mode for predicting the current block is one of the 67 conventional intra prediction modes and the selected mode for predicting the above CU or the one for predicting the left CU is a MIP mode, a mapping between each MIP mode and one of the 67 conventional intra prediction modes enables to substitute this MIP mode with its mapped mode. Since VTM-6.0, any MIP mode is mapped to PLANAR.

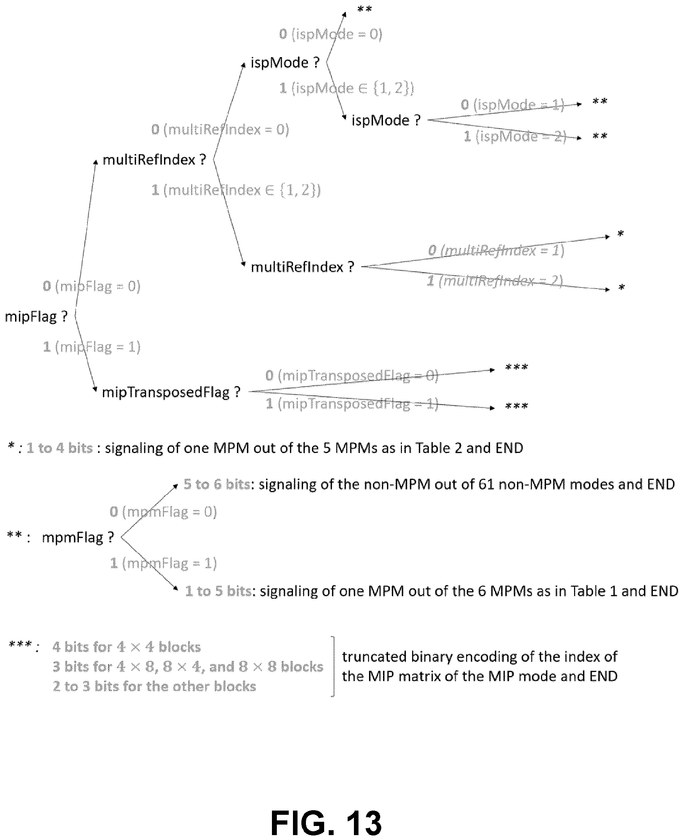

The intra prediction signaling for luminance is summarized via a decision tree in FIG. 13.

*Intra prediction signaling for chrominance*

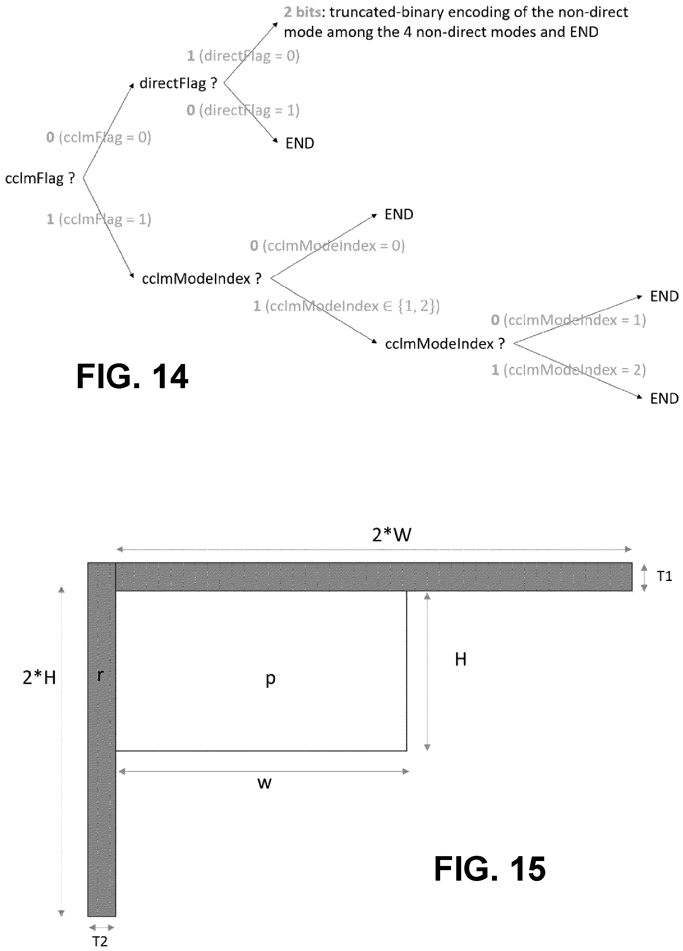

For the two chrominance channels, neither MRL nor ISP nor MIP is used. However, two specific tools are used: the direct mode and Cross-Component Linear Model (CCLM). The direct mode corresponds to the application of the selected mode for predicting the collocated luminance block to the prediction of the current chrominance block. If *directFlag* is equal to 1, the direct mode is selected for predicting the current chrominance block. Otherwise, *directFlag* is equal to 0, and one mode in the list $L$ = [planar, vertical, horizontal, DC] is selected. If a mode in $L$ is equal to the direct mode, this mode is replaced by the mode of index 66. In CCLM, a linear model predicts the current chrominance block from the decoded luminance reference samples surrounding the collocated luminance block. The parameters of the linear model are derived from the decoded reference samples. There exist three CCLM modes, each associated to a different derivation of the parameters. If *cclmFlag* is equal to 1, one of the three CCLM modes is selected. In this case, *directFlag* is not written to the bitstream. Otherwise, *cclmFlag* is equal to 0, and either the direct mode or one of the modes in $L$ is selected. The intra prediction signaling for chrominance is represented in FIG. 14.

**Matrix-based intra prediction replacing conventional modes**

In a proposal for the Enhanced Compression Model (ECM), for a given block to be predicted, conventional intra prediction is replaced by a matrix-based prediction. The reference samples inside an L-shape causal neighborhood template around this given block, shown in FIG. 15, are multiplied by weights (depending on the block shape and on the intra mode) to compute the prediction samples. See Ray et al., "Non-EE2: matrix-based intra prediction replacing conventional intra modes". JVET-AG0197, 33rd meeting, teleconference, 17-26 January 2024.

The reference samples in the causal neighborhood are denoted as r, and F(x,y) is the matrix of weights. Then the prediction P(x,y) can be derived as

$$P(x,y) = \sum_k F(x,y,k)*r(k),$$

where k denotes the index of the reference sample in the template.

This prediction is used for block size with both width and height up to 32 (except for 4x32, 32x4, 8x32 and 32x8). The template size T1 and T2 is equal to 2 for blocks with both width and height up to 16 and matrix-based prediction is only used for mode 0, 1, and (2+2*k), for k = 0, 1, ... 31. For other blocks, template size is set to 1; matrix-based prediction is used for mode 0, 1, and (2+4*k) for k = 0, 1, ... 15; prediction is only performed for 16x16 positions, and the rest of the samples are generated by bilinear interpolation. For all block sizes, block shape and mode-based symmetry is used, so that fewer matrices need to be stored. Reference length is set to W and H for modes greater than 18 and less than 50 and set to 2*W and 2*H otherwise.

Note that, when enabled, as conventional intra prediction modes are replaced by matrix-based intra prediction, no extra signaling is needed.

**Issues addressed by some embodiments**

The use of MIP calls for the storage of relatively large matrices. The total number of coefficients required for matrices which replace conventional modes is estimated to be approximately 1.8M. As each coefficient is coded in 16 bits, this amounts to a total of 3.6MB.

Furthermore, the use of matrix-based prediction calls for heavier computation than classical intra prediction, especially for larger blocks. For example, 8x8 blocks use 68 multiply-accumulate operations (MACs) per pixel, while 16x16 blocks use 132 MACs/pixel. This limits the range of applicability of this feature.

In an attempt to reduce the memory and computation footprint of MIP mode, the size of both input and output is currently reduced with respect to the actual number of coefficients. To do this, the input is down-sampled through averaging, while only a subset of coefficients in the block are directly predicted via MIP, the rest being deduced by interpolation. This could result in a loss of information and hence in a worse rate-distortion tradeoff.

**Overview of example embodiments**

In example embodiments, the original MIP prediction matrices are replaced by the product of two lower-rank matrices. This addresses both the storage and the computation issues, as long as the rank of these two matrices is small enough.

In a first embodiment, all matrices are replaced by a product of matrices of fixed rank.

In a second embodiment, matrices are replaced by a product of matrices with a rank which depends on the block shape.

In a third embodiment, the replacement is only utilized for certain applications (for example during rate-distortion optimization).

In a fourth embodiment, matrices are replaced by the product of lower-rank matrices and then a correction term (e.g. additive or multiplicative) is applied to the product

In a fifth embodiment, a non-linear term (e.g. clipping or rectified linear unit) is applied between the two low-rank matrices, so that the original matrix is replaced by a (shallow) neural network. In a variant, more linear and non-linear layers are added.

As an example, consider a block with dimensions HxW being predicted via MIP. If we denote by n the template size and by m the product H*W, the prediction may be determined by multiplying a matrix A of shape (m,n) by the vector x of length n containing the template samples, yielding a vector of length m. Such vector is then reshaped into an HxW matrix, which contains the predicted samples.

In example embodiments, it is proposed to replace the matrix A by the product of two matrices U and V, where U has shape (m,k) and V has shape (k,n), where k<min(m,n). In this example, k is the rank of U and V.

In terms of storage, A comprises m*n coefficients, while U and V collectively comprise m*k + k*n coefficients. The relative gain in storage is thus equal to (m*n - m*k - n*k)/(m*n).

Computing the predictions using A may be performed by computing the product Ax, which can be done in 2*m*n FLOPs. If A is replaced by U and V, the prediction may be obtained by computing the product UVx=U(Vx), which can be done in 2*k*n + 2*m*k FLOPs. Therefore, the relative gain in terms of FLOPs is again equal to (m*n - m*k - n*k)/(m*n).

The table below shows the storage and computing gains of replacing a matrix by a product of two matrices of rank k.

| Block shape | Matrix shape | k=2 | k=4 | k=8 | k=16 | k=32 | k=64 |
|---|---|---|---|---|---|---|---|
| 4x4 | (16,36) | -81% | -64% | -28% | X | X | X |
| 4x8 8x4 | (32,52) | -89% | -80% | -59% | -19% | X | X |
| 8x8 | (64,68) | -93% | -87% | -75% | -51% | -3% | X |
| 4x16 16x4 | (64,68) | -94% | -89% | -78% | -56% | -12% | X |
| 8x16 16x8 | (128,100) | -96% | -93% | -86% | -71% | -43% | X |
| 16x16 | (256,132) | -97% | -95% | -90% | -81% | -63% | -26% |

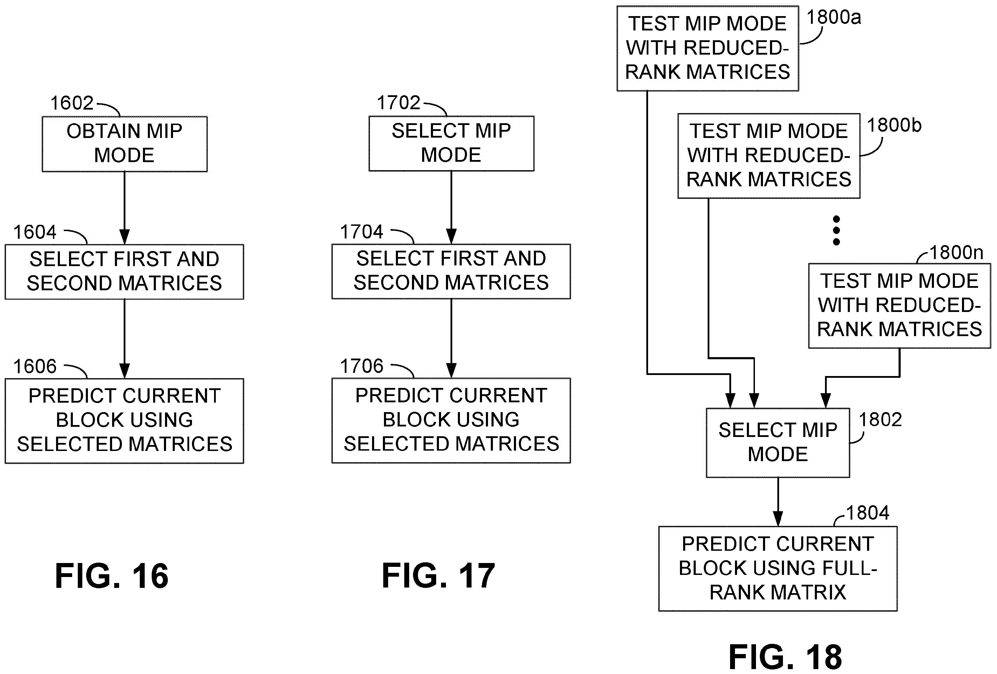

An example video decoding method, which may be performed at block 258 of FIG. 2B, is illustrated in FIG. 16. At 1602, information is obtained indicating a matrix intra prediction mode for a current block. The information may be obtained for example from a bitstream encoding a video that includes the current block. One or more of the techniques described above for intra prediction signaling may be used, among other techniques. The current block has a block shape (e.g. 4x4, 4x8, 8x4, 8x8 and the like). Based on the intra prediction mode and the current block shape, a first matrix U and a second matrix V are selected (1604) from a stored set of intra prediction matrices. The current block is predicted (1606) using a first product of a plurality of reference samples in a neighborhood of the current block, the first matrix, and the second matrix.

For example, in some embodiments the reference samples may be arranged into a vector *x*, and the product (*Vx*) between the second matrix and the reference samples is determined. The result is then multiplied by the first matrix *U* to obtain the product *U*(*Vx*). The elements of *U*(*Vx*) may then be arranged into the appropriate shape for the current block and may be up-sampled if appropriate to obtain the final prediction of the current block. A prediction residual may be obtained from the bitstream and added to this prediction as shown at 266 (FIG. 2B).

In the stored set of intra prediction matrices, each of the matrices in the stored set of intra prediction matrices is associated with a respective block shape and intra prediction mode. In some embodiments, matrix storage may be reduced by allowing re-use of some matrices as appropriate for different block shapes and/or prediction modes. For example, a particular second matrix *V* may be associated with more than one block size and/or more than one prediction mode, but to accommodate those different sizes or modes it would be paired with a different first matrix *U*. Similarly, to reduce coefficient storage, a matrix in the stored set of intra prediction matrices may, in appropriate cases, be used as a second matrix in its native form and as a first matrix in its transposed form (or vice versa).

In some embodiments, all of the matrices in the stored set of intra prediction matrices have the same rank *k*.

In some embodiments, all matrices associated with the same block shape have the same rank, which may be expressed as $k_{H \times W}$. For example, the matrices associated with larger block shapes may have a higher rank.

In some embodiments, at 1606, the current block is predicted by calculating $U(Vx) + Bx$, where $B$ is a matrix that serves as an additive correction term. The components of $U(Vx) + Bx$ may be arranged and possibly up-sampled to generate the prediction of the current block. If $B$ is chosen appropriately (e.g. $B$ is sparse), both the storage and the computation advantage can be partially maintained, while improving the predictive power of the matrix. In some embodiments, B is considered to be sparse if more than half of its components are zero.

In some embodiments, at 1606, the current block is predicted by calculating (c Q ($UV$))x, where "Q" represents the coefficient-wise (or Hadamard) product and c is a matrix that serves as a multiplicative correction term. The components of (c Q ($UV$))x may be arranged and possibly up-sampled to generate the prediction of the current block.

In some embodiments, at 1606, the current block is predicted by calculating $cU(Vx)$, where c is a scalar value that serves as a multiplicative correction term. The components of $cU(Vx)$ may be arranged and possibly up-sampled to generate the prediction of the current block.

An example video encoding method, which may be performed at block 208 of FIG. 2A, is illustrated in FIG. 17. At 1702, a matrix intra prediction mode is selected for a current block, the current block having a block shape, the current block having a plurality of neighboring reference samples. The matrix intra mode may be selected by performing rate-distortion optimization to test a plurality of different matrix intra modes.

Based on the selected intra prediction mode and the current block shape, a selection is made at 1704 of a first matrix and a second matrix from a stored set of intra prediction matrices. At 1706, the current block is predicted using a first product of the reference samples, the first matrix, and the second matrix. Details and variations regarding the stored matrices and the prediction process may be implemented in the encoding process of FIG. 17 as described above with respect to the decoding process of FIG. 16.

In some embodiments, the use of lower-rank matrices may be used to speed up rate-distortion optimization and/or template matching processes. One such method is illustrated in FIG. 18. At each of the blocks 1800a through 1800n, a different MIP mode is tested for prediction of a current block using reduced-rank matrices. The testing may include obtaining a test prediction for the current block, where for each mode i, the test prediction may be obtained using a product $U_i(V_i x)$ of the corresponding first matrix, corresponding second matrix, and the reference samples. A distortion may be calculated for each tested mode, for example by determining a sum of absolute differences (SAD), or some other measure of distortion, between each test prediction and an input block.

At 1802, one of the MIP modes is selected for prediction of the current block. The selection may be made based on rate-distortion optimization considerations in view of the test predictions. At 1804, the block is predicted using a full-rank matrix corresponding to the selected MIP mode. For example, for each MIP mode i (and possibly for each block size), there may be a respective stored matrix $A_i$, and the prediction may be obtained using the product $A_i x$ of that matrix with the reference samples. The components of the product may be arranged and possibly interpolated to generate a final prediction of the current block.

For each full-rank matrix $A_i$ a corresponding set of reduced-rank matrices $U_i$ and $V_i$ may be selected to approximate the full rank matrix, such that $A_i \approx U_i V_i$. This selection may be made by performing a singular value decomposition of the full rank matrix $A_i$. However, the present disclosure is not limited to any particular decomposition technique, as example embodiments make use of pre-stored matrices. For example, the reduced-rank matrices may be selected by trial and error in the encoding of test sequences, after which the selected matrices may be stored for use in actual encoding applications.

The use reduced rank matrices at blocks 1800a-1800n allows test predictions to be generated using a reduced number of operations as compared to generating those test predictions using full rank matrices $A_i$. However, the appropriate full rank matrix $A_i$ is used in generating the final prediction of the current block (e.g. at block 208 of FIG. 2A). That prediction may be subtracted from an input block to generate a residual, which may be encoded in a bitstream along with information identifying the MIP prediction mode. A corresponding encoder in such embodiments does not necessarily make any use of reduced rank matrices, instead generating a prediction based on the full rank matrix $A_i$ associated with the signaled MIP prediction mode.

While the method of FIG. 18 is described above in the context of video encoding, such a method may also be implemented in a template-based process for decoder-side MIP mode derivation. For example, the test predictions described with regard to blocks 1800a-1800n may be test predictions of a reconstructed template region neighboring the current block using reduced-rank matrices, with samples from the causal neighborhood of that template region being used as reference samples. Once an MIP mode is selected that best reproduces the template region (e.g. having a minimum SAD), that mode is selected for prediction of the current block, and the full rank matrix associated with the selected MIP mode is used to generate the prediction of the current block. In such a process, the MIP mode does not need to be signaled explicitly to the decoder. The corresponding encoder performs the same mode selection process to ensure that it generates the same prediction as the decoder and thus can encode the appropriate residual in the bitstream.

Example embodiments can be implemented using the jvet reference software ECM, or any other video encoding or decoding system that includes matrix prediction.

**Further Embodiments**

A video decoding method according to some embodiments comprises: obtaining information indicating a matrix intra prediction mode for a current block, the current block having a block shape, the current block having a plurality of reference samples in a neighborhood of the current block; based on the intra prediction mode and the current block shape, selecting a first matrix and a second matrix from a stored set of intra prediction matrices, wherein each of the matrices in the stored set of intra prediction matrices is associated with a respective block shape and intra prediction mode, and wherein all matrices associated with the same block shape have the same rank; and predicting the current block using a first product of the reference samples, the first matrix, and the second matrix.

A video decoding apparatus according to some embodiments comprises one or more processors configured to perform at least: obtaining information indicating a matrix intra prediction mode for a current block, the current block having a block shape, the current block having a plurality of reference samples in a neighborhood of the current block; based on the intra prediction mode and the current block shape, selecting a first matrix and a second matrix from a stored set of intra prediction matrices, wherein each of the matrices in the stored set of intra prediction matrices is associated with a respective block shape and intra prediction mode, and wherein all matrices associated with the same block shape have the same rank; and predicting the current block using a first product of the reference samples, the first matrix, and the second matrix.

A video encoding method according to some embodiments comprises: selecting a matrix intra prediction mode for a current block, the current block having a block shape, the current block having a plurality of neighboring reference samples; based on the intra prediction mode and the current block shape, selecting a first matrix and a second matrix from a stored set of intra prediction matrices, wherein each of the matrices in the stored set of intra prediction matrices is associated with a respective block shape and intra prediction mode, and wherein all matrices associated with the same block shape have the same rank; and predicting the current block using a first product of the reference samples, the first matrix, and the second matrix.

A video encoding apparatus according to some embodiments comprises: selecting a matrix intra prediction mode for a current block, the current block having a block shape, the current block having a plurality of neighboring reference samples; based on the intra prediction mode and the current block shape, selecting a first matrix and a second matrix from a stored set of intra prediction matrices, wherein each of the matrices in the stored set of intra prediction matrices is associated with a respective block shape and intra prediction mode, and wherein all matrices associated with the same block shape have the same rank; and predicting the current block using a first product of the reference samples, the first matrix, and the second matrix.

A video encoding method according to some embodiments comprises: for each of a plurality of matrix intra prediction modes, obtaining a test prediction for a current block, each test prediction being obtained using a product of plurality of neighboring reference samples, a first matrix associated with the respective mode, and a second matrix associated with the respective mode; selecting a prediction mode based on the test predictions; and predicting the current block using a product of the reference samples and a third matrix associated with the selected prediction mode.

A video encoding apparatus comprising one or more processors configured to perform at least: for each of a plurality of matrix intra prediction modes, obtaining a test prediction for a current block, each test prediction being obtained using a product of plurality of neighboring reference samples, a first matrix associated with the respective mode, and a second matrix associated with the respective mode; selecting a prediction mode based on the test predictions; and predicting the current block using a product of the reference samples and a third matrix associated with the selected prediction mode.

In some embodiments, a product of the first matrix associated with the selected prediction mode and the second matrix associated with the selected prediction mode is an approximation of the third matrix.

A computer-readable medium according to some embodiments stores instructions for performing any of the methods described herein. The medium may be a non-transitory medium.

A computer program product according to some embodiments stores instructions for performing any of the methods described herein.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

The aspects described and contemplated in this disclosure can be implemented in many different forms. While some embodiments are illustrated specifically, other embodiments are contemplated, and the discussion of particular embodiments does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

In the present disclosure, the terms "reconstructed" and "decoded" may be used interchangeably, the terms "pixel" and "sample" may be used interchangeably, the terms "image," "picture" and "frame" may be used interchangeably. Usually, but not necessarily, the term "reconstructed" is used at the encoder side while "decoded" is used at the decoder side.

The terms HDR (high dynamic range) and SDR (standard dynamic range) often convey specific values of dynamic range to those of ordinary skill in the art. However, additional embodiments are also intended in which a reference to HDR is understood to mean "higher dynamic range" and a reference to SDR is understood to mean "lower dynamic range." Such additional embodiments are not constrained by any specific values of dynamic range that might often be associated with the terms "high dynamic range" and "standard dynamic range."

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

Various implementations involve decoding. "Decoding", as used in this disclosure, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this disclosure, for example, extracting a picture from a tiled (packed) picture, determining an upsampling filter to use and then upsampling a picture, and flipping a picture back to its intended orientation.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions.

Various implementations involve encoding. In an analogous way to the above discussion about "decoding", "encoding" as used in this disclosure can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this disclosure.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments refer to rate distortion optimization. In particular, during the encoding process, the balance or trade-off between the rate and distortion is usually considered, often given the constraints of computational complexity. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. A mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Also, as used herein, the word "signal" refers to, among other things, indicating something to a corresponding decoder. For example, in certain embodiments the encoder signals a particular one of a plurality of parameters for region-based filter parameter selection for de-artifact filtering. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

We describe a number of embodiments. Features of these embodiments can be provided alone or in any combination, across various claim categories and types. Further, embodiments can include one or more of the following features, devices, or aspects, alone or in any combination, across various claim categories and types:

- A bitstream or signal that includes one or more of the described syntax elements, or variations thereof.

- A bitstream or signal that includes syntax conveying information generated according to any of the embodiments described.

- Creating and/or transmitting and/or receiving and/or decoding a bitstream or signal that includes one or more of the described syntax elements, or variations thereof.

- Creating and/or transmitting and/or receiving and/or decoding according to any of the embodiments described.

- A method, process, apparatus, medium storing instructions, medium storing data, or signal according to any of the embodiments described.

- A TV, set-top box, cell phone, tablet, or other electronic device that performs matrix intra prediction according to any of the embodiments described, and that displays (e.g. using a monitor, screen, or other type of display) a resulting image.

- A TV, set-top box, cell phone, tablet, or other electronic device that selects (e.g. using a tuner) a channel to receive a signal including an encoded image, and performs matrix intra prediction according to any of the embodiments described.

- A TV, set-top box, cell phone, tablet, or other electronic device that receives (e.g. using an antenna) a signal over the air that includes an encoded image, and performs matrix intra prediction according to any of the embodiments described.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

**Claims**

1. A video decoding method comprising:

   obtaining information indicating a matrix intra prediction mode for a current block, the current block having a block shape, the current block having a plurality of reference samples in a neighborhood of the current block;
   based on the intra prediction mode and the current block shape, selecting a first matrix and a second matrix from a stored set of intra prediction matrices, wherein each of the matrices in the stored set of intra prediction matrices is associated with a respective block shape and intra prediction mode, and wherein all matrices associated with the same block shape have the same rank; and

predicting the current block using a first product of the reference samples, the first matrix, and the second matrix.

2. A video decoding apparatus comprising one or more processors configured to perform at least:

obtaining information indicating a matrix intra prediction mode for a current block, the current block having a block shape, the current block having a plurality of reference samples in a neighborhood of the current block;

based on the intra prediction mode and the current block shape, selecting a first matrix and a second matrix from a stored set of intra prediction matrices, wherein each of the matrices in the stored set of intra prediction matrices is associated with a respective block shape and intra prediction mode, and wherein all matrices associated with the same block shape have the same rank; and

predicting the current block using a first product of the reference samples, the first matrix, and the second matrix.

3. The method of claim 1 or the apparatus of claim 2, wherein all of the matrices in the stored set of intra prediction matrices have the same rank.

4. The method of claim 1 or claim 3 as it depends from claim 1, or the apparatus of claim 2 or claim 3 as it depends from claim 2, wherein the predicting of the current block is further based on a second product of the reference samples with a third matrix, the current block being predicted as a sum of the first product and the second product.

5. The method of claim 4 as it depends from claim 1, or the apparatus of claim 4 as it depends from claim 2, wherein the third matrix is a sparse matrix.

6. The method of claim 1 or claim 3 as it depends from claim 1, or the apparatus of claim 2 or claim 3 as it depends from claim 2, wherein predicting the current block comprises performing an element-wise multiplication of a correction matrix with a product of the first matrix and the second matrix.

7. A video encoding method comprising:

selecting a matrix intra prediction mode for a current block, the current block having a block shape, the current block having a plurality of neighboring reference samples;

based on the intra prediction mode and the current block shape, selecting a first matrix and a second matrix from a stored set of intra prediction matrices, wherein each of the matrices in the stored set of intra prediction matrices is associated with a respective block shape and intra prediction mode, and wherein all matrices associated with the same block shape have the same rank; and

predicting the current block using a first product of the reference samples, the first matrix, and the second matrix.

8. A video encoding apparatus comprising:

selecting a matrix intra prediction mode for a current block, the current block having a block shape, the current block having a plurality of neighboring reference samples;

based on the intra prediction mode and the current block shape, selecting a first matrix and a second matrix from a stored set of intra prediction matrices, wherein each of the matrices in the stored set of intra prediction matrices is associated with a respective block shape and intra prediction mode, and wherein all matrices associated with the same block shape have the same rank; and

predicting the current block using a first product of the reference samples, the first matrix, and the second matrix.

9. The method of claim 7 or the apparatus of claim 8, wherein all of the matrices in the stored set of intra prediction matrices have the same rank.

10. The method of claim 7 or claim 9 as it depends from claim 7, or the apparatus of claim 8 or claim 9 as it depends from claim 8, wherein the predicting of the current block is further based on a second product of the reference samples with a third matrix, the current block being predicted as a sum of the first product and the second product.

11. The method of claim 10 as it depends from claim 7, or the apparatus of claim 10 as it depends from claim 8, wherein the third matrix is a sparse matrix.

12. The method of claim 7 or claim 9 as it depends from claim 7, or the apparatus of claim 8 or claim 9 as it depends from claim 8, wherein predicting the current block comprises performing an element-wise multiplication of a correction matrix with a product of the first matrix and the second matrix.

13. A video encoding method comprising:

for each of a plurality of matrix intra prediction modes, obtaining a test prediction for a current block, each test prediction being obtained using a product of plurality of neighboring reference samples, a first matrix associated with the respective mode, and a second matrix associated with the respective mode;
selecting a prediction mode based on the test predictions; and
predicting the current block using a product of the reference samples and a third matrix associated with the selected prediction mode.

14. A video encoding apparatus comprising one or more processors configured to perform at least:

for each of a plurality of matrix intra prediction modes, obtaining a test prediction for a current block, each test prediction being obtained using a product of plurality of neighboring reference samples, a first matrix associated with the respective mode, and a second matrix associated with the respective mode;
selecting a prediction mode based on the test predictions; and
predicting the current block using a product of the reference samples and a third matrix associated with the selected prediction mode.

15. The method of claim 13 or the apparatus of claim 14, wherein a product of the first matrix associated with the selected prediction mode and the second matrix associated with the selected prediction mode is an approximation of the third matrix.

**FIG. 1**

FIG. 2A

FIG. 2B

P(-1,-1)

P(0,-1)

P(N-1,-1)

P(2N-1,-1)

P(-1,0) →

P(-1,N-1) →

P(-1,2N-1) →

# FIG. 3

0: Planar
1: DC

# FIG. 4

EP 4 679 823 A1

8 decoded reference samples
downsampled by 2

linear transformation
$A_k$: $16 \times 4$ matrix

16 matrices $\Rightarrow$ $k \in [\![0, 15]\!]$

**FIG. 5**

$W$ decoded reference samples above the block and $H$ decoded reference samples on its left side swapped

**FIG. 6**

EP 4 679 823 A1

$bdry_{top}$

$bdry_{left}$

$bdry_{red}$

$A_k \cdot bdry_{red}$

$mode\ k$

$pred_{red}$

$bdry_{left}$

$pred$

8 decoded reference samples above
the block downsampled by 2

linear transformation
$A_k$: $16 \times 8$ matrix
8 matrices $\Longrightarrow$ $k \in [\![0, 7]\!]$

predicted block linearly interpolated
horizontally by 2

**FIG. 7**

0 ⟷ $A_0$

1 ⟷ $A_1$

⋮     ⋮

7 ⟷ $A_7$

*W* decoded reference samples above the block and *H* decoded reference samples on its left side swapped

8

9

⋮

15

**FIG. 8**

$bdry_{top}$

$bdry_{left}$

$bdry_{red}$

$A_k \cdot bdry_{red}$

$mode\ k$

$pred_{red}$

$bdry_{left}$

$pred$

32 decoded reference samples
downsampled by 4

linear transformation
$A_k : 64 \times 8$ matrix
6 matrices ➡ $k \in [\![0, 5]\!]$

predicted block linearly interpolated by
2 both horizontally and vertically

**FIG. 9**

$W$ decoded reference samples above the block and $H$ decoded reference samples on its left side swapped

**FIG. 10**

$bdry_{top}$

$bdry_{left}$

$bdry_{red}$

$\overline{bdry_{red}}$

downsampled reference samples above the block and downsampled reference samples on its left side swapped

$A_k \cdot \overline{bdry_{red}}$

$mode\ j$

linear transformation

$A_k$: $16 \times 4$ matrix

16 matrices ➡ $k \in [\![0,15]\!]$

$j = k + 16$

transposition of the reduced prediction

skip interpolation

pred

**FIG. 11**

EP 4 679 823 A1

**FIG. 12**

EP 4 679 823 A1

** 

0 (ispMode = 0)

ispMode ?

1 (ispMode ∈ {1, 2})

0 (ispMode = 1) → **

ispMode ?

1 (ispMode = 2) → **

0 (multiRefIndex = 0)

multiRefIndex ?

1 (multiRefIndex ∈ {1, 2})

0 (multiRefIndex = 1) → *

multiRefIndex ?

1 (multiRefIndex = 2) → *

0 (mipFlag = 0)

mipFlag ?

1 (mipFlag = 1)

0 (mipTransposedFlag = 0) → ***

mipTransposedFlag ?

1 (mipTransposedFlag = 1) → ***

* : 1 to 4 bits : signaling of one MPM out of the 5 MPMs as in Table 2 and END

5 to 6 bits: signaling of the non-MPM out of 61 non-MPM modes and END

0 (mpmFlag = 0)

** : mpmFlag ?

1 (mpmFlag = 1)

1 to 5 bits: signaling of one MPM out of the 6 MPMs as in Table 1 and END

*** : 4 bits for 4 × 4 blocks

3 bits for 4 × 8, 8 × 4, and 8 × 8 blocks    truncated binary encoding of the index of

2 to 3 bits for the other blocks    the MIP matrix of the MIP mode and END

# FIG. 13

2 bits: truncated-binary encoding of the non-direct mode among the 4 non-direct modes and END

1 (directFlag = 0)

directFlag ?

0 (directFlag = 1)

0 (cclmFlag = 0)

END

cclmFlag ?

END

0 (cclmModeIndex = 0)

1 (cclmFlag = 1)

cclmModeIndex ?

END

1 (cclmModeIndex ∈ {1, 2})

0 (cclmModeIndex = 1)

cclmModeIndex ?

1 (cclmModeIndex = 2)

END

# FIG. 14

2*W

T1

2*H

r

H

p

w

# FIG. 15

T2

**FIG. 16**

**FIG. 17**

**FIG. 18**

EP 4 679 823 A1

Europäisches
Patentamt

European
Patent Office

Office européen
des brevets

## EUROPEAN SEARCH REPORT

**Application Number**

EP 24 30 7058

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2022/256161 A1 (GALPIN FRANCK [FR] ET AL) 11 August 2022 (2022-08-11) <br> * paragraphs [0005] - [0014] * <br> * paragraph [0035] * <br> * paragraphs [0060] - [0105] * <br> ----- | 1-15 | INV. <br> H04N19/11 <br> H04N19/147 <br> H04N19/176 <br> H04N19/593 <br> H04N19/61 |
| A | DIMITRIS BERTSIMAS ET AL: "Sparse Plus Low Rank Matrix Decomposition: A Discrete Optimization Approach", <br> ARXIV.ORG, CORNELL UNIVERSITY LIBRARY, 201 OLIN LIBRARY CORNELL UNIVERSITY ITHACA, NY 14853, <br> 19 April 2023 (2023-04-19), XP091487006, <br> * section 1 * <br> ----- | 4,5,10, 11 | |
| A | MIKIO MORII ET AL: "Data Compression for the Tomo-e Gozen with Low-rank Matrix Approximation", <br> ARXIV.ORG, CORNELL UNIVERSITY LIBRARY, 201 OLIN LIBRARY CORNELL UNIVERSITY ITHACA, NY 14853, <br> 13 December 2016 (2016-12-13), <br> XP080738833, <br> DOI: 10.3847/1538-4357/835/1/1 <br> * section 2; Figure 1 * <br> ----- | 4,5,10, 11 | TECHNICAL FIELDS SEARCHED (IPC) <br><br> H04N |
| A | SULLIVAN G J ET AL: "RATE-DISTORTION OPTIMIZATION FOR VIDEO COMPRESSION", <br> IEEE SIGNAL PROCESSING MAGAZINE, IEEE, USA, <br> vol. 15, no. 6, <br> 1 November 1998 (1998-11-01), pages 74-90, <br> XP011089821, <br> ISSN: 1053-5888, DOI: 10.1109/79.733497 <br> [retrieved on 2002-08-06] <br> * pages 80-81: "Optimization Techniques" * <br> ----- | 15 | |
| | -/-- | | |

The present search report has been drawn up for all claims

| Place of search | Date of completion of the search | Examiner |
|---|---|---|
| The Hague | 11 June 2025 | André, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

# EUROPEAN SEARCH REPORT

Application Number

EP 24 30 7058

Europäisches
Patentamt

European
Patent Office

Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HELLE (FRAUNHOFER) P ET AL: "CE3-related: Non-linear weighted intra prediction (cross-check report in JVET-K0262)", 11. JVET MEETING; 20180711 - 20180718; LJUBLJANA; (THE JOINT VIDEO EXPLORATION TEAM OF ISO/IEC JTC1/SC29/WG11 AND ITU-T SG.16 ), , no. JVET-K0196 11 July 2018 (2018-07-11), XP030199426, Retrieved from the Internet: URL:http://phenix.int-evry.fr/jvet/doc_end _user/documents/11_Ljubljana/wg11/JVET-K01 96-v3.zip JVET-K0196_r2.docx [retrieved on 2018-07-11] * abstract * * sections 1.1, 1.2 and 1.6 * ----- | 1-15 | |
| | | | TECHNICAL FIELDS SEARCHED (IPC) |

The present search report has been drawn up for all claims

| Place of search | Date of completion of the search | Examiner |
|---|---|---|
| The Hague | 11 June 2025 | André, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

page 2 of 2

36

## ANNEX TO THE EUROPEAN SEARCH REPORT
## ON EUROPEAN PATENT APPLICATION NO.

EP 24 30 7058

This annex lists the patent family members relating to the patent documents cited in the above-mentioned European search report.
The members are as contained in the European Patent Office EDP file on
The European Patent Office is in no way liable for these particulars which are merely given for the purpose of information.

11-06-2025

| Patent document cited in search report | Publication date | Patent family member(s) | Publication date |
|---|---|---|---|
| US 2022256161 A1 | 11-08-2022 | BR 112021026574 A2 | 15-02-2022 |
| | | CN 114145021 A | 04-03-2022 |
| | | EP 4005211 A1 | 01-06-2022 |
| | | KR 20220035108 A | 21-03-2022 |
| | | US 2022256161 A1 | 11-08-2022 |
| | | WO 2021015935 A1 | 28-01-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 24306162

- US 20220256161 A1

**Non-patent literature cited in the description**

- **RAY et al.** Non-EE2: matrix-based intra prediction replacing conventional intra modes. *JVET-AG0197, 33rd meeting*, 17 January 2024